# EUROPEAN PATENT SPECIFICATION

(11) **EP 2 617 782 B1**
(45) Date of publication and mention of the grant of the patent: **04.03.2015**
(21) Application number: 13151057.0
(22) Date of filing: 11.01.2013
(51) Int. Cl.: C09D 11/10, B41M 7/00

(54) **Inkjet recording method**
Tintenstrahlaufzeichnungsverfahren
Procédé d'enregistrement à jet d'encre

(30) Priority: 18.01.2012 JP 2012007981
(43) Date of publication of application: 24.07.2013
(73) Proprietor: Fujifilm Corporation, Minato-ku Tokyo (JP)
(72) Inventor: HAYATA, Yuuichi, Ashigarakami-gun, Kanagawa (JP)
(74) Representative: Morpeth, Fraser Forrest

(56) References cited:
- EP-A1- 2 345 703
- EP-A1- 2 433 807
- WO-A1-2007/125273
- US-A1- 2011 169 903
- DATABASE WPI Week 200969 Thomson Scientific, London, GB; AN 2009-P28890 XP002695111, & JP 2009 221416 A (FUJI FILM CO LTD) 1 October 2009 (2009-10-01)

## Description

The present invention relates to an inkjet recording method.

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low, particularly in the case of small lot production. Furthermore, there is little noise and it is excellent as an image recording system, and has been attracting attention in recent years.

Among them, an inkjet recording ink composition (radiation-curing inkjet recording ink composition), which is curable upon exposure to radiation such as UV rays, is an excellent system from the viewpoint of it being possible to print on various types of recording media because, compared with a solvent-based ink composition, the drying properties are excellent and an image is resistant to spreading since the majority of the components in the ink composition cure upon exposure to radiation such as UV rays.

Furthermore, as conventional inkjet recording methods, published Japanese translation 2009-534514 of a PCT application and JP-A-2011-144250 (JP-A denotes a Japanese unexamined patent application publication) are known.

It is an object of the present invention to provide an inkjet recording method that can give a printed material having high surface gloss, little bleeding in an image edge part, and excellent scratch resistance and image coverage.

The object of the present invention has been achieved by means described in <1>. It is described below together with <2> to <11>, which are preferred embodiments.
<1> An inkjet recording method comprising (1) a step of discharging via an inkjet head an ink comprising (Component A) a silicone-based or fluorine-based surfactant and (Component B) at least one type of monofunctional monomer among compounds represented by Formula (I) or Formula (II), (2) a step of irradiating all inks discharged via the head with actinic radiation by exposure means having an illumination intensity of at least 20 mW/cm² but less than 300 mW/cm² at a time of at least 0 seconds but less than 0.20 seconds after discharge, and (3) a step of irradiating all inks discharged via the head with actinic radiation by exposure means having an illumination intensity of at least 1,500 mW/cm² after at least 0.20 seconds have elapsed after discharge, the ink having a surface tension at 25°C of 22.0 to 26.0 mN/m, and the ink, excluding only Component A, having a surface tension at 25°C of 33.0 to 38.5 mN/m 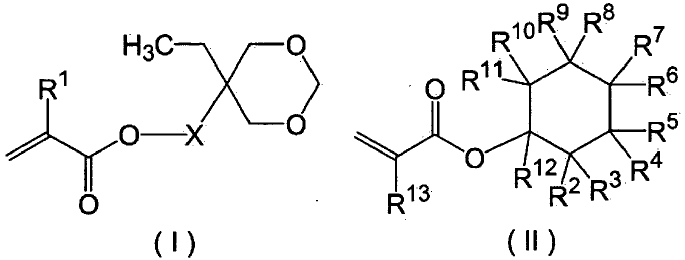 wherein in the Formulae R¹ denotes a hydrogen atom or a methyl group, X denotes a single bond or a divalent linking group, R² to R¹² independently denote a hydrogen atom or an alkyl group, and R¹³ denotes a hydrogen atom or a methyl group,
<2> the inkjet recording method according to <1> above, wherein the ink further comprises (Component C) a polyfunctional monomer,
<3> the inkjet recording method according to <1> or <2> above, wherein the ink comprises a polyfunctional (meth)acrylate compound in an amount of at least 5 mass% but no greater than 30 mass% of the total ink mass,
<4> the inkjet recording method according to any one of <1> to <3> above, wherein the ink further comprises an *N*-vinyllactam,
<5> the inkjet recording method according to <4> above, wherein the *N-*vinyllactam is *N*-vinylcaprolactam,
<6> the inkjet recording method according to any one of <1> to <5> above, wherein Component B comprises a compound represented by Formula (I),
<7> the inkjet recording method according to any one of <1> to <6> above, wherein the ink further comprises (Component D) a radical polymerization initiator,
<8> the inkjet recording method according to any one of <1> to <7> above, wherein the ink further comprises (Component G) a colorant,
<9> the inkjet recording method according to any one of <1> to <8> above, wherein steps (1) and (2) above are repeated twice to sixteen times for the same area,
<10> the inkjet recording method according to any one of <1> to <9> above, wherein the ink has a surface tension at 25°C of 22.5 to 24.0 mN/m, and
<11> the inkjet recording method according to any one of <1> to <10> above, wherein the ink, excluding only Component A, has a surface tension at 25°C of 35.0 to 38.5 mN/m.

In accordance with the present invention, there can be provided an inkjet recording method that can give a printed material having high surface gloss, little bleeding in an image edge part, and excellent scratch resistance and image coverage.

### Brief Description of Drawings

FIG. 1 is a schematic drawing of one example of a mechanism equipped with exposure means on both sides of an inkjet head unit (lamp-equipped inkjet head) that can suitably be used in the inkjet recording method of the present invention.
FIG. 2 is a schematic drawing of a case in which the mechanism equipped with exposure means on both sides of an inkjet head unit (lamp-equipped inkjet head) shown in FIG. 1 is operated in the right-hand direction with respect to the plane of the paper.
FIG. 3 is a schematic drawing of a case in which the mechanism equipped with exposure means on both sides of an inkjet head unit (lamp-equipped inkjet head) shown in FIG. 1 is operated in the left-hand direction with respect to the plane of the paper.

### Explanation of Reference Numerals and Symbols

10: mechanism equipped with exposure means on both sides of inkjet head unit (lamp-equipped inkjet head)
12: inkjet head unit
14, 16: exposure means
18Y: yellow inkjet head
18M: magenta inkjet head
18C: cyan inkjet head
18K: black inkjet head
D: printing direction
L1: smallest distance between inkjet head unit 12 and exposure means 14 in printing direction D
L2: largest distance between inkjet head unit 12 and exposure means 14 in printing direction D
L3: distance between printing inkjet heads of respective colors in direction D

The present invention is explained in detail below.

In the present invention, the notation 'lower limit to upper limit', which expresses a numerical range, has the same meaning as 'at least the lower limit but no greater than the upper limit', and the notation 'upper limit to lower limit' has the same meaning as 'no greater than the upper limit but at least the lower limit'. Furthermore, in the present invention, 'mass%' and 'wt%' have the same meaning, and 'parts by mass' and 'parts by weight' have the same meaning. Moreover, '(Component A) a silicone-based or fluorine-based surfactant', etc. may simply be called 'Component A', etc., and '(1) a step of discharging via an inkjet head an ink (hereinafter, also called an 'ink composition') comprising (Component A) a silicone-based or fluorine-based surfactant and (Component B) at least one type of monofunctional monomer among compounds represented by Formula (I) or Formula (II)', etc. may also be called 'step (1)', etc.

### (Inkjet recording method)

The inkjet recording method of the present invention comprises (1) a step of discharging via an inkjet head an ink comprising (Component A) a silicone-based or fluorine-based surfactant and (Component B) at least one type of monofunctional monomer among compounds represented by Formula (I) or Formula (II), (2) a step of irradiating all inks discharged via the head with actinic radiation by exposure means having an illumination intensity of at least 20 mW/cm² but less than 300 mW/cm² at a time of at least 0 seconds but less than 0.20 seconds after discharge, and (3) a step of irradiating all inks discharged via the head with actinic radiation by exposure means having an illumination intensity of at least 1,500 mW/cm² after at least 0.20 seconds have elapsed after discharge, the ink having a surface tension of 22.0 to 26.0 mN/m, and the ink, excluding only Component A, having a surface tension of 33.0 to 38.5 mN/m. 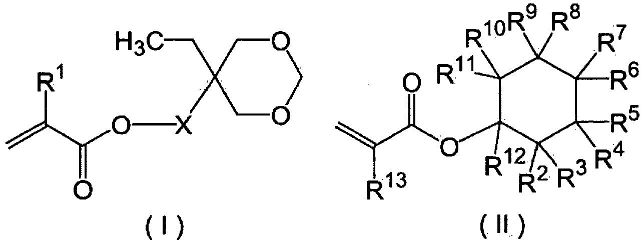 (In the Formulae R¹ denotes a hydrogen atom or a methyl group, X denotes a single bond or a divalent linking group, R² to R¹² independently denote a hydrogen atom or an alkyl group, and R¹³ denotes a hydrogen atom or a methyl group.)

The present inventors have found that the surface tension of an ink comprising a surfactant, in particular a silicone-based or fluorine-based surfactant, is greatly influenced by the type of surfactant used, and have also found that the surface tension of an ink that does not comprise a silicone-based or fluorine-based surfactant is greatly influenced by the hydrophilicity/hydrophobicity of the monomer that it contains.

As a result of a detailed investigation by the present inventors, it has been found that by setting the surface tension at 25°C of an ink comprising a silicone-based or fluorine-based surfactant at 22.0 to 26.0 mN/m, setting the surface tension at 25°C of the ink excluding only the silicone-based or fluorine-based surfactant at 33.0 to 38.5 mN/m, and irradiating the ink discharged via the inkjet head as described in step (2) above with actinic radiation by exposure means with an illumination intensity of at least 20 mW/cm² but less than 300 mW/cm² at a time of at least 0 seconds but less than 0.20 seconds after discharge, a printed material having high surface gloss, little bleeding in an image edge part, and excellent scratch resistance and image coverage can be obtained.

When the surface tension at 25°C of the ink comprising a silicone-based or fluorine-based surfactant is 22.0 to 26.0 mN/m, good coverage due to the effect of spreading while wet of the surfactant and good scratch resistance are obtained. When the surface tension at 25°C of the ink is less than 22.0 mN/m, the contact angle of a fired droplet superimposed on a previously fired and cured fired droplet becomes large, the roughness of a cured film intensifies, and an image having low gloss is obtained. On the other hand, when it exceeds 26.0 mN/m, it is surmised that the flow of a fired droplet is weak, the image coverage becomes poor and, in addition, the surface scratch resistance becomes low.

Furthermore, when the surface tension at 25°C of the ink excluding the silicone-based or fluorine-based surfactant is 33.0 to 38.5 mN/m, the ink receives an appropriate level of polymerization inhibition by oxygen when irradiated with actinic radiation, a fired droplet spreads while wet, and an image having high gloss and good coverage is obtained. When it is less than 33.0 mN/m, the polarity of the monomer is low, polymerization inhibition by oxygen easily occurs, and although an image has somewhat high gloss, the scratch resistance is low and a printed image with bleeding is obtained. When it exceeds 38.5 mN/m, since the amount of dissolved oxygen in the ink is low and the ink is cured instantly by exposure at a time of at least 0 seconds but less than 0.20 seconds after discharge, spreading while wet of a fired droplet is poor, and a printed material having low image coverage and gloss is obtained.

Furthermore, as shown in step (2) above, bleeding of an image edge part can be suppressed by irradiating the ink discharged via the inkjet head with actinic radiation by exposure means having an illumination intensity of at least 20 mW/cm² but less than 300 mW/cm² at a time of at least 0 seconds but less than 0.20 seconds after discharge.

Here, 'poor image coverage' means a phenomenon in which, since an image formed by the inkjet recording method is a collection of fired inkjet droplets, gaps occur between landed fired droplets in an image area, all of the recording medium is not covered, and gaps are formed in the image, and 'excellent image coverage' means that landed fired droplets spread well in an image area and an image without the gaps is obtained.

### <Ink composition>

The inkjet recording method of the present invention employs an ink composition comprising (Component A) a silicone-based or fluorine-based surfactant and (Component B) at least one type of monofunctional monomer among compounds represented by Formula (I) or Formula (II).

The surface tension at 25°C of the ink is 22.0 to 26.0 mN/m, preferably 22.5 to 24.0 mN/m, and particularly preferably 23.0 to 23.5 mN/m.

The surface tension at 25°C of the ink excluding the silicone-based or fluorine-based surfactant is 33.0 to 38.5 mN/m, preferably 35.0 to 38.5 mN/m, and particularly preferably 36.0 to 38.0 mN/m.

In addition, the surface tension in the present invention is the surface tension at 25°C.

The method for measuring surface tension is not particularly limited, but the surface tension may be measured at a controlled temperature of 25°C using a surface tensiometer (FACESURFACE TENSIOMETER CBVB-A3) manufactured by Kyowa Interface Science Co., Ltd.

The method for preparing an ink not comprising a silicone-based or fluorine-based surfactant is not particularly limited, but a method in which ink components are analyzed by a known method and the ink not comprising a silicone-based or fluorine-based surfactant is separately prepared can be cited as a preferred example.

The ink composition that can be used in the present invention is preferably a non-aqueous ink composition.

The ink composition that can be used in the present invention is preferably an oil-based ink composition that can be cured with actinic radiation. Furthermore, the ink composition that can be used in the present invention is preferably a non-solvent type ink composition that does not contain a volatile organic solvent. 'Actinic radiation' means radiation that can give energy for generating an initiating species in the ink composition when irradiated, and includes α rays, γ rays, X rays, UV, visible light, and an electron beam. Among them, from the viewpoint of curing sensitivity and the ready availability of equipment, UV and an electron beam are preferable, and UV is more preferable.

### (Component A) Silicone-based or fluorine-based surfactant

The ink composition that can be used in the present invention comprises (Component A) a silicone-based or fluorine-based surfactant.

The ink composition may comprise either one of a silicone-based surfactant or a fluorine-based surfactant or both a silicone-based surfactant and a fluorine-based surfactant.

Furthermore, the ink composition may comprise one type of silicone-based surfactant on its own or two or more types thereof. The same applies to the fluorine-based surfactant.

Examples of the silicone-based surfactant (silicon surfactant) include a polyether-modified silicone-based surfactant, a methylstyrene-modified silicone-based surfactant, an olefin-modified silicone-based surfactant, an alcohol-modified silicone-based surfactant, an alkyl-modified silicone-based surfactant, and a polydialkylsiloxane.

As the silicone-based surfactant, a wide range of commercial products may be used, and examples thereof include BYK-307, 322, 323, 331, 333, 347, 348, 349, 377, 378, UV 3510, and 3570 (BYK-Chemie), KF-351, 352, 353, 354, 355, 412, 413, 414, 618, 945, 8012, 865, 6001, and 6002 (Shin-Etsu Silicone), and TSF4440, 4460, 4700, 4701, and 4421 (GE Toshiba Silicones).

Examples of the fluorine-based surfactant (fluorinated surfactant) include a perfluoroalkylsulfonic acid and a salt thereof, a fluoroalkyl carboxylic acid and a salt thereof, a perfluoroalkylphosphoric acid ester, a fluoroalkyl polyoxyethyleneethanol, and a fluoroalkyl ether.

As the fluorine-based surfactant, a wide range of commercial products may be used, and examples thereof include the ZONYL series (E. I. du Pont de Nemours and Company), the FLUORAD series (3M), and the Megafac series (DIC). Furthermore, compounds described in '13700 Chemical Products' p.1239 to p.1242, The Chemical Daily Co., Ltd. (2000) can be cited.

The content of Component A in the ink composition that can be used in the present invention is preferably 0.07 to 1.5 mass% relative to the total mass of the ink composition, more preferably 0.07 to 0.7 mass%, and yet more preferably 0.1 to 0.5 mass%. When in this range, an ink composition having a surface tension in the above range can easily be prepared, and a printed material having little bleeding in an image edge part and excellent scratch resistance can be obtained.

### (Component B) At least one type of monofunctional monomer among compounds represented by Formula (I) or Formula (II)

The ink composition that can be used in the present invention comprises (Component B) at least one type of monofunctional monomer among compounds represented by Formula (I) or Formula (II) above. Due to the ink composition comprising at least a compound represented by Formula (I) or Formula (II), which have a specific ring structure, an image having particularly high gloss can be obtained.

The ink composition that can be used in the present invention may comprise either one compound represented by Formula (I) or Formula (II) or may comprise both a compound represented by Formula (I) and a compound represented by Formula (II).

Furthermore, the ink composition may comprise one type of compound represented by Formula (I) on its own or two or more types thereof. Moreover, the same applies to a compound represented by Formula (II).

The ink composition that can be used in the present invention preferably comprises a compound represented by Formula (I). Due to it comprising a compound represented by Formula (I), an image having little bleeding in an edge part and excellent surface gloss is obtained. 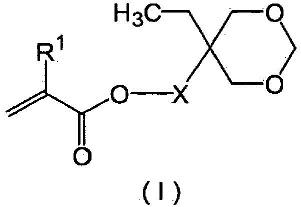 (In Formula (I), R¹ denotes a hydrogen atom or a methyl group, and X denotes a single bond or a divalent linking group.)

The compound represented by Formula (I) may be an acrylate compound or a methacrylate compound, but is preferably an acrylate compound, that is, R¹ is a hydrogen atom.

The divalent linking group denoted by X in Formula (I) is not particularly limited as long as the effects of the present invention are not greatly impaired; it is preferably a divalent hydrocarbon group or a divalent group in which a hydrocarbon group and an ether bond are combined, and is more preferably a divalent hydrocarbon group, an alkyleneoxy group, or an alkyleneoxy alkyl group, a poly(alkyleneoxy) group, or a poly(alkyleneoxy)alkyl group. Furthermore, the number of carbons of the divalent linking group is preferably 1 to 60, and more preferably 1 to 20.

X in Formula (I) is preferably a single bond, a divalent hydrocarbon group, or a divalent group in which a hydrocarbon group and an ether bond are combined, more preferably a divalent hydrocarbon group having 1 to 20 carbons, yet more preferably a divalent hydrocarbon group having 1 to 8 carbons, and particularly preferably a methylene group.

Specific preferred examples of compounds represented by Formula (I) include, but of course are not limited to, compounds (I-1) to (I-4) shown below.

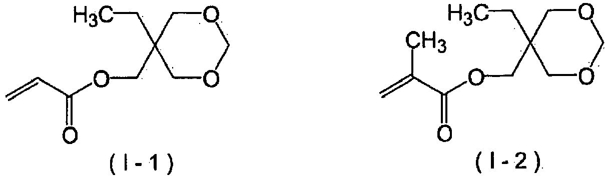

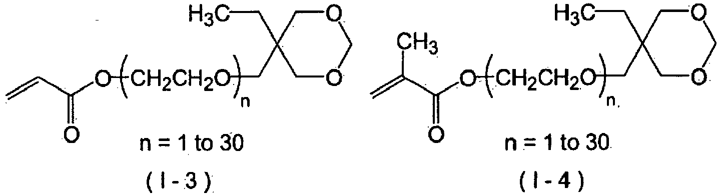

Among them, cyclic trimethylolpropane formal acrylate (I-1) and cyclic trimethylolpropane formal methacrylate (I-2) are preferable, and cyclic trimethylolpropane formal acrylate (I-1) is particularly preferable.

The content of the compound represented by Formula (I) in the ink composition that can be used in the present invention is preferably 10 to 65 mass% relative to the total mass of the ink composition, more preferably 15 to 60 mass%, yet more preferably 20 to 60 mass%, and particularly preferably 25 to 50 mass%. When in this range, a printed material having higher surface gloss and better image coverage can be obtained.

From the viewpoint of surface gloss, the ink composition that can be used in the present invention preferably comprises a compound represented by Formula (II). 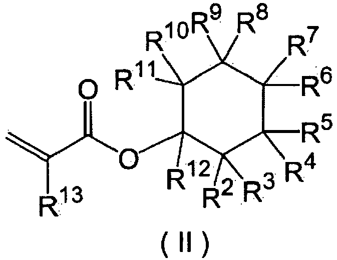 (In Formula (II), R² to R¹² independently denote a hydrogen atom or an alkyl group, and R¹³ denotes a hydrogen atom or a methyl group.)

R² to R¹² independently denote a hydrogen atom or an alkyl group. The alkyl group is preferably a straight-chain or branched alkyl group having 1 to 10 carbons, more preferably a straight-chain or branched alkyl group having 1 to 6 carbons, and yet more preferably a methyl group or a *t*-butyl group. It is preferable for at least one of R² to R¹² to be an alkyl group, it is more preferable for 1 to 5 thereof to be an alkyl group, and it is yet more preferably for 1 to 3 thereof to be an alkyl group.

R¹³ denotes a hydrogen atom or a methyl group, and from the viewpoint of curability it is preferably a hydrogen atom.

Specific examples of the compound represented by Formula (II) include 4-*t*-butylcyclohexyl (meth)acrylate, cyclohexyl (meth)acrylate, and trimethylcyclohexyl (meth)acrylate. Among them, 4-*t*-butylcyclohexyl (meth)acrylate and/or 3,3,5-trimethylcyclohexyl (meth)acrylate are preferable, and 4-*t*-butylcyclohexyl acrylate and/or 3,3,5-trimethylcyclohexyl acrylate are more preferable.

The content of the compound represented by Formula (II) in the ink composition that can be used in the present invention is preferably 5 to 45 mass% relative to the total mass of the ink composition, more preferably 10 to 40 mass%, and yet more preferably 15 to 35 mass%. When in this range, a printed material having high surface gloss, little bleeding of an image edge part, and excellent scratch resistance can be obtained.

Furthermore, the content of Component B in the ink composition that can be used in the present invention is preferably 5 to 65 mass% relative to the total mass of the ink composition, more preferably 10 to 60 mass%, and yet more preferably 15 to 50 mass%.

### (Component C) Polyfunctional monomer

The ink composition that can be used in the present invention preferably comprises as a polymerizable compound (Component C) a polyfunctional monomer, and more preferably a polyfunctional (meth)acrylate compound.

Furthermore, with regard to the ink composition that can be used in the present invention, the content of a compound having two or more ethylenically unsaturated bonds (polyfunctional monomer) is preferably 0 to 30 mass% of the entire ink composition, more preferably 3 to 25 mass%, and yet more preferably 5 to 20 mass%. Moreover, with regard to the ink composition that can be used in the present invention, the content of the polyfunctional (meth)acrylate compound is preferably 3 to 25 mass% of the entire ink composition, and particularly preferably 5 to 20 mass%.

As the polyfunctional monomer, it is preferable for it to comprise a difunctional (meth)acrylate compound and/or a difunctional vinyl ether compound, and it is particularly preferable for it to comprise a difunctional (meth)acrylate compound having an optionally branched hydrocarbon chain having at least 5 carbons and/or a divinyl ether compound having an ethylene glycol chain. When it is this mode, the curability and the antiblocking properties and flexibility of a printed material are excellent.

Furthermore, the polyfunctional (meth)acrylate compound is preferably a difunctional (meth)acrylate compound or a trifunctional (meth)acrylate compound, and more preferably a difunctional (meth)acrylate compound.

Preferred examples of the polyfunctional (meth)acrylate compound include a difunctional (meth)acrylate compound having a hydrocarbon chain having at least 5 carbons in the molecule, and specific examples include neopentyl glycol di(meth)acrylate, a propylene oxide (PO)-modified neopentyl glycol diacrylate, hexanediol diacrylate, a PO-modified hexanediol diacrylate, nonanediol di(meth)acrylate, decanediol di(meth)acrylate, dodecanediol di(meth)acrylate, tridecanediol di(meth)acrylate, octadecanediol di(meth)acrylate, 3-methyl-1,5-pentanediol di(meth)acrylate, 2-n-butyl-2-ethyl-1,3-propanediol di(meth)acrylate, cyclohexanedimethanol di(meth)acrylate, and cyclohexanediol di(meth)acrylate. Among them, hexanediol diacrylate and a PO-modified neopentyl glycol di(meth)acrylate can be preferably cited, and a PO-modified neopentyl glycol diacrylate is particularly preferable.

In accordance with the use of a polyfunctional (meth)acrylate compound, and in particular the compounds above, an image having excellent surface gloss is obtained, and an ink composition having excellent curability is obtained. Furthermore, from the viewpoint of curability and antiblocking properties, a polyfunctional acrylate compound is preferable.

From the viewpoint of obtaining an image having better scratch resistance, the total content of Component C in the ink composition of the present invention is preferably 1 to 50 mass% relative to the total mass of the ink composition, more preferably 2 to 40 mass%, and yet more preferably 4 to 30 mass%.

### (Component D) Radical polymerization initiator

The ink composition of the present invention preferably comprises (Component D) a radical polymerization initiator.

The radical polymerization initiator is a compound that forms a radical polymerization initiating species by absorbing external energy such as above-mentioned actinic radiation. The radical polymerization initiator may be used singly or in a combination of two or more compounds.

Preferred examples of the radical polymerization initiator that can be used in the present invention include a radical photopolymerization initiator, and more preferred examples thereof include an α-hydroxy ketone compound, a monoacylphosphine compound, an aromatic onium salt compound, an organic peroxide, a thio compound, a hexaarylbiimidazole compound, a ketoxime ester compound, a borate compound, an azinium compound, a metallocene compound, an active ester compound, and a compound having a carbon-halogen bond. Specific examples of these polymerization initiator described in JP-A-2008-208190. Among them, an aromatic ketone and acylphosphine compound can preferably be cited, and an α-hydroxy ketone compound and an acylphosphine compound can more preferably be cited.

The aromatic ketone is preferably an α-hydroxyketone compound.

Examples thereof include 1-[4-(2-hydroxyethoxy)phenyl]-2-hydroxy-2-methyl-1-propan-1-one, 2-hydroxy-2-methyl-1-phenyl-propan-1-one, and 1-hydroxycyclohexyl phenyl ketone. Among them, 1-hydroxycyclohexyl phenyl ketone compound is preferable. The 1-hydroxycyclohexyl phenyl ketone compound referred to in the present invention comprises a compound obtained by substituting 1-hydroxycyclohexyl phenyl ketone with any substituent. The substituent may be selected freely from a range that enables an ability as a radical polymerization initiator to be exhibited, and specific examples thereof include an alkyl group having 1 to 4 carbons.

Preferred examples of the acylphosphine compound include acylphosphine oxide compounds described in JP-A-2008-208190, and among them a monoacylphosphine oxide compound is more preferable.

Specific examples of the monoacylphosphine compound include methyl isobutyrylmethylphosphinate, methyl isobutyrylphenylphosphinate, methyl pivaloylphenylphosphinate, methyl 2-ethylhexanoylphenylphosphinate, isopropyl pivaloylphenylphosphinate, methyl *p*-tolylphenylphosphinate, methyl o-tolylphenylphosphinate, methyl 2,4-dimethylbenzoylphenylphosphinate, isopropyl *p*-*t*-butylbenzoylphenylphosphinate, methyl acryloylphenylphosphinate, isobutyryldiphenylphosphine oxide, 2-ethylhexanoyldiphenylphosphine oxide, o-tolyldiphenylphosphine oxide, *p*-*t-*butylbenzoyldiphenylphosphine oxide, 3-pyridylcarbonyldiphenylphosphine oxide, acryloyldiphenylphosphine oxide, benzoyldiphenylphosphine oxide, vinyl pivaloylphenylphosphinate, adipoyl-bis-diphenylphosphine oxide, pivaloyldiphenylphosphine oxide, *p*-tolyldiphenylphosphine oxide, 4-(*t-*butyl)benzoyldiphenylphosphine oxide, terephthaloyl-bis-diphenylphosphi ne oxide, 2-methylbenzoyldiphenylphosphine oxide, versatoyldiphenylphosphine oxide, 2-methyl-2-ethylhexanoyldiphenylphosphine oxide, 1-methylcyclohexanoyldiphenylphosphine oxide, isopropyl pivaloylphenylphosphinate and 2,4,6-trimethylbenzoyldiphenylphosphine oxide, and among them, 2,4,6-trimethylbenzoyldiphenylphosphine oxide is preferable.

The ink composition can be used in the present invention preferably comprises α-hydroxyketone compound and/or acylphosphine oxide compound and more preferably comprises α-hydroxyketone compound and acylphosphine oxide compound. Specifically, the ink composition preferably comprises α-hydroxyketone compound and/or monoacylphosphine oxide compound, and from the viewpoint of the curability and the anti-blocking properties, the combination of α-hydroxyketone compound and monoacylphosphine oxide compound is more preferable, and the combination of α-hydroxyketone compound, monoacylphosphine oxide compound, and benzophenone is yet more preferable.

The ink composition can be used in the present invention preferably contains a sensitizer in order to promote decomposition of the radical polymerization initiator by absorbing specific actinic radiation.

Examples of the sensitizer include polynuclear aromatic compounds (e.g. pyrene, perylene, triphenylene, 2-ethyl-9,10-dimethoxyanthracene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), coumarins (e.g. 7-diethylamino-4-methylcoumarin), and thioxanthones (e.g. thioxanthone, 2-isopropylthioxanthone, 4-isopropylthioxanthone).

The ink composition can be used in the present invention preferably does not comprises thioxanthone compound and thiochromanone compound.

The sensitizer may be used singly or in a combination of two or more compounds.

The ink composition that can be used in the present invention may comprise a polymerization accelerator.

The polymerization accelerator is not particularly limited; preferred examples include an amine compound, and an aminobenzoate derivative is more preferable. They are compounds that reduce inhibition of polymerization by oxygen.

Examples of the aminobenzoate derivative include, but are not limited to, ethyl 4-dimethylaminobenzoate and 2-ethylhexyl 4-dimethylaminobenzoate.

Furthermore, examples of commercially available polymerization accelerators include SPEEDCURE EHA and SPEEDCURE EDB (LAMBSON).

From the viewpoint of curability and uniformity of the degree of curing within a cured film, the content of the polymerization initiator in the ink composition can be used in the present invention is preferably 0.01 to 35 mass % relative to the total content of polymerizable compounds, more preferably 0.5 to 20 mass %, and yet more preferably 1.0 to 15 mass %.

Furthermore, when a sensitizer is used, the total content of the polymerization initiator relative to the content of the sensitizer is preferably in the range of 200:1 to 1:200 as a ratio by mass of polymerization initiator:sensitizer, more preferably 50:1 to 1:50, and yet more preferably 20:1 to 1:5.

When a sensitizer is used, from the viewpoint of ink coloration properties, the content of the sensitizer in the ink composition is preferably 0.01 to 20 mass % relative to the total mass of the ink composition, more preferably 0.1 to 15 mass %, and yet more preferably 0.5 to 10 mass %.

When a polymerization accelerator is used, from the viewpoint of curability and uniformity of the degree of curing within a cured film, the content of the polymerization accelerator in the ink composition is preferably 0.01 to 5 mass % relative to the total mass of the ink composition, and more preferably 0.1 to 3 mass %.

### (Component E) Other polymerizable compound

The ink composition that can be used in the present invention comprises preferably a monofunctional polymerizable compound other than Component B as a polymerizable compound, and more preferably an *N-*vinyllactam and/or a monofunctional (meth)acrylate compound other than Component B.

As the other polymerizable compound, a monofunctional ethylenically unsaturated compound is preferable.

As the other monofunctional polymerizable compound, a known monofunctional polymerizable compound may be used, and examples thereof include a (meth)acrylate compound other than Component B, a vinyl ether compound, an allyl compound, an *N*-vinyl compound, and an unsaturated carboxylic acid. Examples thereof include radically polymerizable monomers described in JP-A-2009-221414, polymerizable compounds described in JP-A-2009-209289, and ethylenically unsaturated compounds described in JP-A-2009-191183.

The ink composition that can be used in the present invention preferably comprises an *N*-vinyllactam.

An *N*-vinyllactam is preferably a compound represented by Formula (E-1).

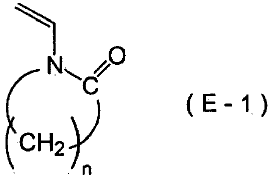

In Formula (E-1), n denotes an integer of 2 to 6; n is preferably an integer of 3 to 5 from the viewpoint of flexibility after the ink composition is cured, adhesion to a recording medium, and ready availability of starting materials, n is more preferably 3 or 5, and n is particularly preferably 5, which is *N*-vinylcaprolactam. *N*-vinylcaprolactam is preferable since it has excellent safety, is commonly used and is readily available at a relatively low price, and gives particularly good ink curability and adhesion of a cured film to a recording medium.

The *N*-vinyllactam may have a substituent such as an alkyl group or an aryl group on the lactam ring, and may have a saturated or unsaturated ring structure bonded to the lactam ring.

An *N*-vinyllactam may be used singly or in a combination of two or more compounds.

When an *N*-vinyllactam is used, the content of the *N*-vinyllactam is preferably 5 to 35 mass% relative to the total mass of the ink composition, more preferably 8 to 24 mass%, yet more preferably 9 to 20 mass%, and particularly preferably 10 to 18 mass%. When in this range, a curing profile is promoted in which, while strongly promoting the curability of the interior of a printed material, the outermost surface alone of a cured film is selectively maintained in a liquid state for a long period of time, and an image having high saturation, high reflection color density, excellent surface gloss, and suppressed stripe unevenness is obtained.

Preferred examples of the other polymerizable compound include an aromatic group-containing monofunctional (meth)acrylate compound. The cyclic structure of the aromatic group-containing monofunctional (meth)acrylate compound may contain a hetero atom such as O, N, S, etc.

Preferred examples of an aromatic ring structure that the aromatic group-containing monofunctional (meth)acrylate compound may have include a ring structure selected from the group consisting of benzene, naphthalene, anthracene, indene, fluorene, *1H*-phenalene, phenanthrene, triphenylene, pyrene, naphthacene, tetraphene, biphenyl, *as*-indacene, *s*-indacene, acenaphthylene, fluoranthene, acephenanthrylene, aceanthrylene, chrysene, pleiadene, furan, thiophene, pyrroline, pyrazoline, imidazoline, isooxazoline, isothiazoline, pyridine, pyridazine, pyrimidine, pyrazine, triazole, and tetrazole. Among them, the aromatic ring structure is preferably benzene ring structure.

The aromatic group-containing monofunctional (meth)acrylate compound is particularly preferably phenoxyethyl (meth)acrylate.

When the ink composition comprises an aromatic group-containing monofunctional (meth)acrylate compound, the content of the aromatic group-containing monofunctional (meth)acrylate compound in the ink composition is preferably 1 to 45 mass % relative to the total mass of the ink composition, more preferably 3 to 40 mass %, and particularly preferably 5 to 35 mass %.

Examples of the other monofunctional polymerizable compound include unsaturated carboxylic acids such as acrylic acid, methacrylic acid, itaconic acid, crotonic acid, isocrotonic acid, and maleic acid, and salts thereof, an ethylenically unsaturated group-containing anhydride, acrylonitrile, styrene.

Examples of other monofunctional polymerizable compound include (meth)acrylic acid derivatives such as 2-ethylhexyl(meth)acrylate, 2-hydroxyethyl(meth)acrylate, butoxyethyl(meth)acrylate, carbitol (meth)acrylate, cyclohexyl (meth)acrylate, benzyl (meth)acrylate, methyl (meth)acrylate, *n*-butyl (meth)acrylate, glycidyl (meth)acrylate, dimethylaminomethyl (meth)acrylate, *N*-methylol (meth)acrylamide, diacetone (meth)acrylamide, and epoxy (meth)acrylate, allyl compound derivatives such as allyl glycidyl ether, etc.

More specifically, commercially available or industrially known monofunctional polymerizable monomers, such as those described in 'Kakyozai Handobukku' (Crosslinking Agent Handbook), Ed. S. Yamashita (Taiseisha, 1981); 'UV/EB Koka Handobukku (Genryo)' (UV/EB Curing Handbook (Starting Materials)) Ed. K. Kato (Kobunshi Kankoukai, 1985); 'UV/EB Koka Gijutsu no Oyo to Shijyo' (Application and Market of UV/EB Curing Technology), p. 79, Ed. RadTech (CMC, 1989); and E. Takiyama 'Poriesuteru Jushi Handobukku' (Polyester Resin Handbook), (The Nikkan Kogyo Shimbun Ltd., 1988) may be used.

When the ink composition comprises other monofunctional polymerizable compound, the content of the other monofunctional polymerizable compound in the ink composition is preferably 1 to 30 mass % relative to the total mass of the ink composition, more preferably 3 to 25 mass %, and particularly preferably 5 to 20 mass %.

### (Component F) Oligomer

The ink composition can be used in the present invention preferably comprises (Component F) an oligomer.

An oligomer is generally a polymer in which a limited number (usually 5 to 100) of monomers are bonded, and known compounds called oligomers may be selected freely, but in the present invention it is preferable to select a polymer having a weight-average molecular weight of 400 to 10,000 (more preferably 500 to 5,000).

The oligomer may have a radically polymerizable group. The radically polymerizable group is preferably an ethylenically unsaturated group, and more preferably a (meth)acryloxy group.

The oligomer in the present invention may be any oligomer, and examples thereof include an olefin-based oligomer (an ethylene oligomer, a propylene oligomer, a butene oligomer, etc.), a vinyl-based oligomer (a styrene oligomer, a vinyl alcohol oligomer, a vinylpyrrolidone oligomer, an acrylate oligomer, a methacrylate oligomer, etc.), a diene-based oligomer (a butadiene oligomer, a chloroprene rubber, a pentadiene oligomer, etc.), a ring-opening polymerization type oligomer (di-, tri-, tetra-ethylene glycol, polyethylene glycol, polyethylimine, etc.), an addition-polymerization type oligomer (an oligoester acrylate, a polyamide oligomer, a polyisocyanate oligomer), and an addition-condensation oligomer (a phenolic resin, an amino resin, a xylene resin, a ketone resin, etc.). Among them an oligoester (meth)acrylate is preferable, and among them a urethane (meth)acrylate, a polyester (meth)acrylate, and an epoxy (meth)acrylate are preferable, and a urethane (meth)acrylate is more preferable.

As the urethane (meth)acrylate, an aliphatic urethane (meth)acrylate and an aromatic urethane (meth)acrylate may preferably be cited, and an aliphatic urethane (meth)acrylate may more preferably be cited.

Furthermore, the urethane (meth)acrylate is preferably a tetra- or lower-functional urethane (meth)acrylate, and more preferably a di- or lower-functional urethane (meth)acrylate.

In accordance with a urethane (meth)acrylate being contained, an ink composition having excellent adhesion to a substrate and excellent curability is obtained.

With respect to the oligomer, 'Origomar Handobukku (Oligomer Handbook)' (edited by Junji Furukawa, The Chemical Daily Co., Ltd.) may also be referred to.

Specific examples of oligomer commercial products include products shown below.

Examples of urethane (meth)acrylates include R1204, R1211, R1213, R1217, R1218, R1301, R1302, R1303, R1304, R1306, R1308, R1901, and R1150 manufactured by Dai-Ichi Kogyo Seiyaku Co., Ltd., the EBECRYL series (e.g. EBECRYL 230, 270, 4858, 8402, 8804, 8807, 8803, 9260, 1290, 1290K, 5129, 4842, 8210, 210, 4827, 6700, 4450, and 220) manufactured by Daicel-Cytec Company Ltd., NK Oligo U-4HA, U-6HA, U-15HA, U-108A, and U200AX manufactured by Shin-Nakamura Chemical Co., Ltd., and Aronix M-1100, M-1200, M-1210, M-1310, M-1600, and M-1960 manufactured by Toagosei Co., Ltd.

Examples of polyester (meth)acrylates include the EBECRYL series (e.g. EBECRY L770, IRR467, 81, 84, 83, 80, 675, 800, 810, 812, 1657, 1810, IRR302, 450, 670, 830, 870, 1830, 1870, 2870, IRR267, 813, IRR483, 811, etc.) manufactured by Daicel-Cytec Company Ltd. and Aronix M-6100, M-6200, M-6250, M-6500, M-7100, M-8030, M-8060, M-8100, M-8530, M-8560, and M-9050 manufactured by Toagosei Co., Ltd.

Examples of epoxy (meth)acrylates include the EBECRYL series (e.g. EBECRYL 600, 860, 2958, 3411, 3600, 3605, 3700, 3701, 3703, 3702, 3708, RDX63182, 6040, etc.) manufactured by Daicel-Cytec Company Ltd.

The oligomer may be used singly or in a combination of two or more types.

The content of the oligomer in the ink composition that can be used in the present invention is, relative to the total mass of the ink composition, preferably 0.1 to 50 mass %, more preferably 0.5 to 20 mass %, and yet more preferably 1 to 10 mass %.

### (Component G) Colorant

The ink composition that can be used in the present invention may preferably contain a colorant in order to improve the visibility of a formed image area.

The colorant is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

The pigment that can be used in the present invention is not particularly limited and, for example, organic and inorganic pigments having the numbers below described in the Color Index may be used.

That is, as a red or magenta pigment, Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36;
as a blue or cyan pigment, Pigment Blue 1, 15, 15:1, 15:2, 15:3, 15:4, 15:6, 16, 17-1, 22, 27, 28, 29, 36, or 60;
as a green pigment, Pigment Green 7, 26, 36, or 50;
as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193;
as a black pigment, Pigment Black 7, 28, or 26;
as a white pigment, Pigment White 6, 18, or 21, etc. may be used according to the intended application.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include CI Disperse Yellow 5, 42, 54, 64, 79, 82, 83, 93, 99, 100, 119, 122, 124, 126, 160, 184:1, 186, 198, 199, 201, 204, 224, and 237; CI Disperse Orange 13, 29, 31:1, 33, 49, 54, 55, 66, 73, 118, 119, and 163; CI Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; CI Disperse Violet 33; CI Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and CI Disperse Green 6:1 and 9.

It is preferable that the colorant is added to the ink composition and then dispersed in the ink to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The colorant may be added directly to the ink composition, but in order to improve dispersibility it may be added in advance to a solvent or a dispersing medium such as a polymerizable compound used in the present invention.

In the present invention, in order to avoid the problem of the solvent resistance being degraded when the solvent remains in the cured image and the VOC (Volatile Organic Compound) problem of the residual solvent, it is preferable to add the colorant in advance to a dispersing medium such as a polymerizable compound. As a polymerizable compound used, it is preferable in terms of dispersion suitability to select a monomer having the lowest viscosity.

The colorants may be used by appropriately selecting one type or two or more types according to the intended purpose of the ink composition.

When a colorant such as a pigment that is present as a solid in the ink composition is used, it is preferable for the colorant, the dispersant, the dispersing medium, dispersion conditions, and filtration conditions to be set so that the average particle size of colorant particles is preferably 0.005 to 0.5 µm, more preferably 0.01 to 0.45 µm, and yet more preferably 0.015 to 0.4 µm. By such control of particle size, clogging of a head nozzle can be suppressed, and the ink storage stability, the transparency, and the curing sensitivity can be maintained.

A method for measuring particle size of particles such as a pigment, etc. is not particularly limited, examples of the method for measuring particle size of particles include a microscopic method, a mass method, a light scattering method, a light blocking method, an electrical resistance method, an acoustic method, and a dynamic light scattering method, and a microscopic method and a dynamic light scattering method are particularly preferable. Examples of a microscope used in a microscopic method include a scanning electron microscope, and a transmission electron microscope, etc.

Examples of a particles measuring instrument measured by a dynamic light scattering method include Nanotrac UPA-EX150 manufactured by Nikkiso Co., Ltd., and dynamic light scattering spectrophotometers DLS-7000 series manufactured by Otsuka Electronics Co., Ltd., etc.

The content of the colorant in the ink composition is appropriately selected according to the color and the intended purpose, and is preferably 0.01 to 30 mass % relative to the mass of the entire ink composition.

### (Component H) Dispersant

The ink composition can be used in the present invention preferably comprises a dispersant. In particular, when the pigment is used, the ink composition preferably comprises a dispersant in order to stably disperse the pigment in the ink composition.

As the dispersant that can be used in the present invention, a polymeric dispersant is preferable. The 'polymeric dispersant' referred to in the present invention means a dispersant having a weight-average molecular weight of 1,000 or greater.

Examples of the polymeric dispersant include polymeric dispersants such as DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by EFKA Additives), Disperse Aid 6, Disperse Aid 8, Disperse Aid 15, and Disperse Aid 9100 (manufactured by San Nopco Limited); various types of SOLSPERSE dispersants such as Solsperse 3000, 5000, 9000, 12000, 13240, 13940, 17000, 22000, 24000, 26000, 28000, 32000, 36000, 39000, 41000, and 71000 (manufactured by Noveon); Adeka Pluronic L31, F38, L42, L44, L61, L64, F68, L72, P95, F77, P84, F87, P94, L101, P103, F108, L121, and P-123 (manufactured by Adeka Corporation), Ionet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink composition of the present invention is appropriately selected according to the intended purpose, and is generally preferably 0.05 to 15 wt % relative to the weight of the entire ink composition.

### Other components

The ink composition can be used in the present invention may comprise as necessary, in addition to the above-mentioned components, a co-sensitizer, a UV absorber, an antioxidant, an antifading agent, a conductive salt, a solvent, a polymer compound, a basic compound, etc. They are described in JP-A-2009-221416 and may be used in the present invention as well.

Furthermore, from the viewpoint of storage properties and suppression of head clogging, the ink composition can be used in the present invention preferably comprises a polymerization inhibitor.

The polymerization inhibitor is preferably added at 200 to 20,000 ppm relative to the total amount of the ink composition of the present invention.

Examples of the polymerization inhibitor include a nitroso-based polymerization inhibitor, a hindered phenol-based polymerization inhibitor, a hindered amine-based polymerization inhibitor, hydroquinone, benzoquinone, *p*-methoxyphenol, TEMPO, TEMPOL, and Al cupferron.

### Properties of ink composition

In the present invention, the ink composition has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition that can be used in the present invention, it is preferable that its component ratio is appropriately adjusted so that the viscosity is in the above-mentioned range. When the viscosity at room temperature (25°C) is set to be high, even when a porous recording medium (support) is used, penetration of the ink composition into the recording medium can be prevented, and uncured monomer can be reduced. Furthermore, ink spreading when droplets of ink composition have landed can be suppressed, and as a result there is the advantage that the image quality is improved.

### <Steps of inkjet recording method>

The inkjet recording method of the present invention comprises at least (1) a step of discharging via an inkjet head an ink comprising (Component A) a silicone-based or fluorine-based surfactant and (Component B) at least one type of monofunctional monomer among compounds represented by Formula (I) or Formula (II) (hereinafter, also called a 'discharge step'), (2) a step of irradiating all inks discharged via the head with actinic radiation by exposure means having an illumination intensity of at least 20 mW/cm² but less than 300 mW/cm² at a time of at least 0 seconds but less than 0.20 seconds after discharge (hereinafter, also called a 'first exposure step'), and (3) a step of irradiating all inks discharged via the head with actinic radiation by exposure means having an illumination intensity of at least 1,500 mW/cm² after at least 0.20 seconds have elapsed after discharge (hereinafter, also called a 'second exposure step').

Furthermore, the printed material of the present invention is a printed material recorded by the inkjet recording method of the present invention.

### Discharge step

The inkjet recording method of the present invention comprises (1) a step of discharging via an inkjet head an ink comprising (Component A) a silicone-based or fluorine-based surfactant and (Component B) at least one type of monofunctional monomer among compounds represented by Formula (I) or Formula (II) (discharge step).

The discharge step in the inkjet recording method of the present invention may employ inkjet recording equipment that is described in detail below.

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink composition onto a recording medium in discharge step of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition, a supply pipe, an ink composition supply tank immediately before an inkjet head, a filter, and a piezo system inkjet head. The piezo system inkjet head may be driven so as to discharge a multisize dot of preferably 1 to 100 pL, more preferably 3 to 42 pL, and yet more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

As described above, with respect to the radiation curing ink composition such as the ink composition, since it is desirable for the ink composition to be discharged at a constant temperature, a section from the ink composition supply tank to the inkjet head is thermally insulated and heated. A method of controlling temperature is not particularly limited, but it is preferable to provide, for example, temperature sensors at a plurality of pipe section positions, and control heating according to the ink flow rate and the temperature of the surroundings. The temperature sensors may be provided on the ink composition supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition or the inkjet recording ink composition is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition that can be used in the present invention having an ink viscosity at 25°C of no more than 50 mPa·s since good discharge stability can be obtained. By employing this method, high discharge stability can be realized.

The radiation curing type ink composition such as the ink composition that can be used in the present invention generally has a viscosity that is higher than that of a normal ink or a water-based ink used for an inkjet recording ink composition, and variation in viscosity due to a change in temperature at the time of discharge is large. Viscosity variation in the ink has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of ink composition is preferably ±5°C of a set temperature, more preferably ±2°C of the set temperature, and yet more preferably ±1°C of the set temperature.

### First exposure step

The inkjet recording method of the present invention comprises (2) a step of irradiating all inks discharged via the head with actinic radiation by exposure means having an illumination intensity of at least 20 mW/cm² but less than 300 mW/cm² at a time of at least 0 seconds but less than 0.20 seconds after discharge (first exposure step).

The illumination intensity of the exposure means in the first exposure step is at least 20 mW/cm² but less than 300 mW/cm², and is preferably 50 to 200 mW/cm². When in this range, spreading while wet of a fired droplet is particularly promoted and a printed material having excellent surface gloss is obtained; furthermore, it is difficult for fired droplet interference to occur, and a printed material having inconspicuous stripe unevenness is obtained.

Moreover, in the first exposure step, discharged ink is exposed by the exposure means within 0.20 seconds after ink discharge, but it is preferable to carry out exposure at a time between 0.05 and 0.18 seconds after discharge, and it is more preferable to carry out exposure at a time between 0.06 and 0.10 seconds after discharge.

In single-pass inkjet drawing and ink curing of the inkjet recording method of the present invention, it is preferable to carry out exposure by the exposure means, rather than by providing a light source between the ink jet heads of respective colors and carrying out curing for the image of each color, by carrying out exposure using the exposure means after the inks of all colors are discharged since overlapping between fired ink droplets is large and spreading while wet on a recording medium is promoted, and as a result an image having high surface gloss is obtained.

The ink composition discharged onto a recording medium is cured by irradiation with actinic radiation. This is due to a polymerization initiator contained in the ink composition being decomposed by irradiation with actinic radiation, thus generating a polymerization initiating species such as a radical, which then functions so as to cause and promote a polymerization reaction of a polymerizable compound. During this process, if a sensitizer is present together with the polymerization initiator in the ink composition, the sensitizer in the system absorbs actinic radiation, attains an exited state, and makes contact with the polymerization initiator, thus promoting decomposition of the polymerization initiator and achieving a curing reaction with higher sensitivity.

The exposure means (light source) in the first exposure step is not particularly limited, and a mercury lamp, a metal halide lamp, a light-emitting diode (LED), etc. may be used. Among them, a mercury lamp or a metal halide lamp is preferably used.

The position where the light source is placed is not particularly limited, and in the case of a head-scanning type shuttle scanning method, for example, by placing the light source on the side of the inkjet head it becomes possible to carry out the initial exposure within 0.1 seconds from ink discharge. In the case of bidirectional printing, it is preferable to place lamps on both sides of the inkjet head since uniformity of exposure is maintained.

Furthermore, in the case where there is a mechanism for transporting a recording medium, it is also preferable to use a fixed wide lamp. It is also preferable to use in combination a fixed wide lamp and shuttle scanning in which a lamp is placed on the side of the inkjet head.

### Second exposure step

The inkjet recording method of the present invention comprises (3) a step of irradiating all inks discharged via the head with actinic radiation by exposure means having an illumination intensity of at least 1,500 mW/cm² after at least 0.20 seconds have elapsed after discharge (hereinafter, also called a 'second exposure step'). By allowing at least 0.20 seconds after ink discharge, spreading while wet of a fired droplet progresses sufficiently, and a printed material having excellent surface gloss is obtained.

With regard to the upper limit for the elapsed time from ink discharge to exposure in the second exposure step, from the viewpoint of a balance being achieved between suppression of contamination such as attachment of dust in the air and promotion of spreading while wet of a fired droplet, it is preferably at least 0.20 seconds but no longer than 30 seconds, more preferably at least 0.5 seconds but no longer than 20 seconds, and particularly preferably at least 0.8 seconds but no longer than 5 seconds.

From the viewpoint of a balance being achieved between productivity/rapid drying and spreading while wet of a fired droplet, the illumination intensity of the exposure means in the second exposure step is preferably 1,500 to 3,000 mW/cm², more preferably 1,600 to 2,800 mW/cm², and particularly preferably 1,800 to 2,700 mW/cm².

As the exposure means in the second exposure step, a light source cited as an example for the exposure means in the first exposure step can suitably be used.

Furthermore, from the viewpoint of matching the light absorption characteristics of a polymerization initiator, it is preferable that the first lamp and the second lamp have the same emission spectrum, and it is more preferable to use identical lamps. It is preferable to adjust a predetermined illumination intensity and integrated exposure by changing the output power. A method for changing the output power of the exposure means, the illumination intensity, or the integrated exposure is not particularly limited, and a known method may be used.

Furthermore, in the inkjet recording method of the present invention, it is preferable that the discharged ink is completely cured by the first exposure step and second exposure step that are carried out for the first time after discharge. 'Being completely cured' in the present invention means a state in which the ink interior and surface are completely cured. Specifically, it can be assessed by pressing a permeable medium such as plain paper thereagainst and examining if the ink is transferred to the permeable medium.

That is, a case in which there is no transfer at all is called a state of being completely cured.

Furthermore, in the inkjet recording method of the present invention, after carrying out steps (1) to (3), further exposure (so-called post-curing) may be carried out by the exposure means used in the first exposure step, the exposure means used in the second exposure step, and/or other exposure means without carrying out ink discharge.

The illumination intensity of the exposure means in the post-curing is not particularly limited, but is preferably 1,500 to 3,000 mW/cm², more preferably 1,600 to 2,800 mW/cm², and particularly preferably 1,800 to 2,700 mW/cm².

Furthermore, the inkjet recording method of the present invention preferably does not carry out the post-curing.

In accordance with use of the inkjet recording method described above, it becomes possible to keep the dot diameter of a landed ink composition constant for various types of recording media having different surface wettabilities, thus improving the image quality. In order to obtain a color image, it is preferable to superimpose in sequence from a color having low lightness. By superimposing in sequence from an ink composition having low lightness, radiation can easily reach an ink composition in a deeper part, and good curing sensitivity, reduction in residual monomer, and improvement of adhesion can be anticipated.

In the inkjet recording method of the present invention, a printed material is preferably drawn by a plurality of passes. In particular, printing is preferably carried out with 2 to 16 passes, more preferably 3 to 14 passes, yet more preferably 6 to 12 passes, and particularly preferably 8 to 10 passes. When in this range, a printed material having excellent surface gloss and resolution is obtained.

With regard to the inkjet recording method of the present invention, there can be envisaged a pattern in which after the inkjet discharge of step (1) of the first pass, the pinning exposure process of step (2) is carried out, subsequently the main exposure process of step (3) is carried out, and after that the next inkjet printing pass is carried out, that is, step (1), step (2), and step (3) are repeated for each printing pass, and a process in which after the inkjet discharge of step (1), a pinning exposure process of step (2) is carried out, subsequently the inkjet discharge of step (1) is carried out, that is, step (1) and step (2) are repeated in turn, and after all printing passes are finally completed, the main exposure of step (3) is carried out as a post-cure.

In the inkjet recording method of the present invention, the latter process, in which step (1) and step (2) are repeated in turn, and after all the printing passes are finally completed, the main exposure of step (3) is carried out as a post-cure, is preferable since a printed material having high surface gloss and coverage is obtained.

By employing such a inkjet recording method as described above, it is possible to maintain a uniform dot diameter for landed ink composition even for various types of recording medium (support) having different surface wettability, thereby improving the image quality. In order to obtain a color image, it is preferable to superimpose colors in order from those with a high lightness. By superimposing ink compositions in order from one with high lightness, it is easy for radiation to reach a lower ink composition, the curing sensitivity is good, the amount of residual monomer decreases, and an improvement in adhesion can be expected.

The order in which colored ink compositions are discharged is not particularly limited, but it is preferable to apply to a recording medium from a colored ink composition having a high lightness; when the ink compositions of yellow, cyan, magenta, and black are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the recording medium in the order white → light cyan → light magenta → yellow → cyan → magenta → black.

In the present invention, the recording medium is not particularly limited, and a recording medium known as a support and a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium may suitably be used.

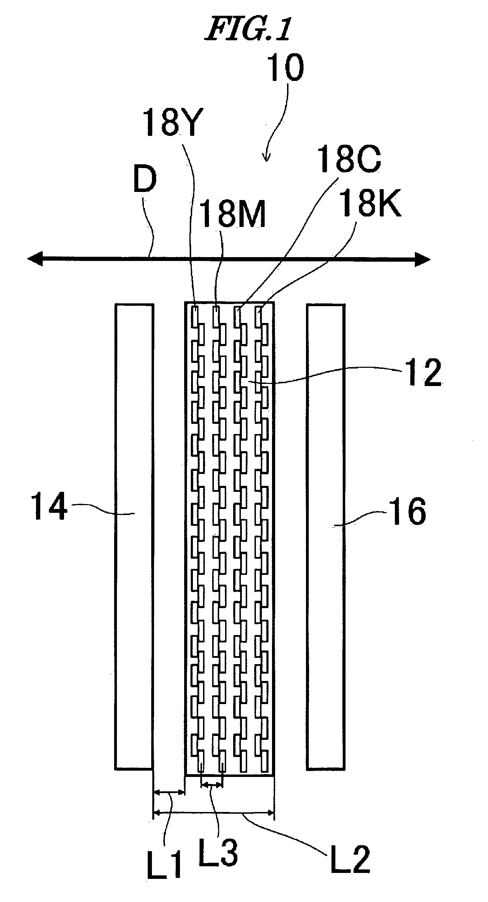

The inkjet recording method of the present invention preferably uses a mechanism equipped with exposure means on both sides of an inkjet head unit (also called a lamp-equipped inkjet head') of the type shown in FIG. 1 to FIG. 3.

FIG. 1 is a schematic drawing of one example of a mechanism equipped with exposure means on both sides of an inkjet head unit (lamp-equipped inkjet head) that can suitably be used in the inkjet recording method of the present invention.

A mechanism 10 (lamp-equipped inkjet head 10) equipped with exposure means on both sides of an inkjet head unit shown in FIG. 1 has an inkjet head unit 12 in the middle, and has one exposure means 14, 16 on each of both sides of the inkjet head unit 12. There are provided within the inkjet head unit 12 twenty-eight inkjet heads for each color (yellow inkjet head 18Y, magenta inkjet head 18M, cyan inkjet head 18C, and black inkjet head 18K).

Furthermore, as examples of a smallest distance L1, in a printing direction D, between the inkjet head unit 12 and the exposure means 14 of the lamp-equipped inkjet head 10 shown in FIG. 1, a largest distance L2 between the inkjet head unit 12 and the exposure means 14 in the printing direction D, and a distance L3 between inkjet heads of respective colors in the printing direction D, L1 = 12 cm, L2 = 28 cm, and L3 = 4 cm.

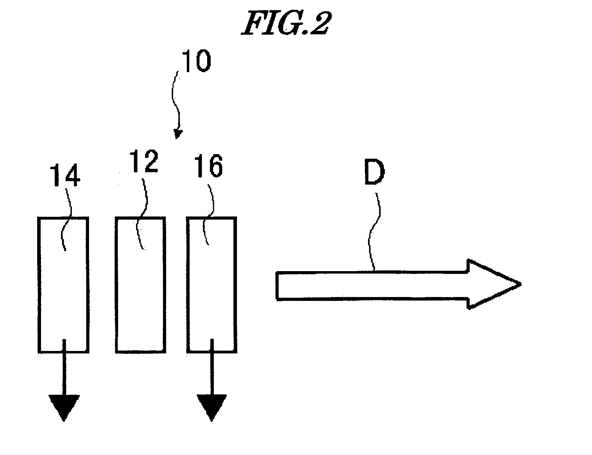

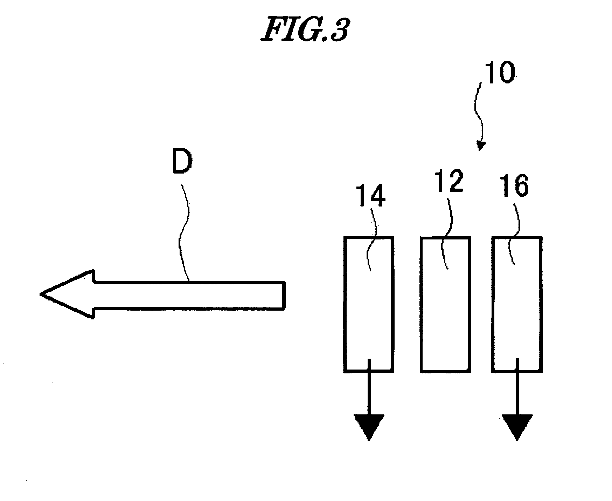

FIG. 2 and FIG. 3 are schematic drawings when the mechanism equipped with exposure means on both sides of an inkjet head unit (lamp-equipped inkjet head) shown in FIG. 1 is operated in each printing direction D.

FIG. 2 shows a case in which the printing direction D of the lamp-equipped inkjet head 10 is on the right-hand side in the plane of the paper. In the case shown in FIG. 2, exposure means 16 positioned to the rear of the inkjet head unit 12 in the printing direction functions as exposure means in the first exposure step (also called a 'trailing lamp'), and exposure means 14 positioned forward of the inkjet head unit 12 in the printing direction D functions as exposure means in the second exposure step (also called a 'leading lamp').

On the other hand, FIG. 3 shows a case in which the printing direction D of the lamp-equipped inkjet head 10 is on the left-hand side in the plane of the paper. In the case of FIG. 3, the exposure means 14 positioned to the rear of the inkjet head unit 12 in the printing direction functions as exposure means in the first exposure step (trailing lamp), and the exposure means 16 positioned forward of the inkjet head unit 12 in the printing direction D functions as exposure means in the second exposure step (leading lamp).

That is, ink discharged from the inkjet head unit 12 is subjected to the first exposure step by the exposure means 14 or exposure means 16 (trailing lamp) positioned to the rear of the inkjet head unit 12 in the printing direction D. Subsequently, when the lamp-equipped inkjet head 10 is operated in the printing direction D opposite to the above, the discharged ink that has been subjected to the first exposure step is subjected to the second exposure step by the exposure means 16 or exposure means 14 (leading lamp) positioned forward of the inkjet head unit 12 in the printing direction D.

Furthermore, by subsequently repeating ink discharge by the inkjet head unit 12 (discharge step) and the first exposure step and second exposure step, ink discharge is repeated 2 to 16 times for the same area, thus carrying out image formation.

Since the exposure means 14, 16 on both sides of the inkjet head unit 12 function as a trailing lamp and a leading lamp, they are equipped with a mechanism (not illustrated) for changing the illumination intensity of actinic radiation that is to be emitted.

Furthermore, there may be employed as necessary not only a mode as in the lamp-equipped inkjet head 10 shown in FIG. 1 in which one exposure means is provided on each of the left and right of the inkjet head unit 12, but also for example a mode in which two or more exposure means are provided on either one thereof, a mode in which two exposure means are provided on each of the left and right of the inkjet head unit, etc.

Furthermore, there may be employed as necessary not only a mode of the inkjet head unit 12 shown in FIG. 1 in which each color has 28 inkjet heads, but also for example a mode in which there are any number of inkjet heads for each color. Moreover, in the case of a mode in which an inkjet head unit has only an inkjet head for one color, image recording equipment equipped with inkjet head units for each color can preferably be cited as an example.

Among them, the inkjet recording method of the present invention is preferably a method that uses a mechanism equipped with exposure means on both sides of an inkjet head unit. Furthermore, from the viewpoint of carrying out irradiation within 0.20 second after discharge without causing the problem of ink on the inkjet nozzle surface being cured during waiting by means of leaked light, the distance between exposure means such as a lamp and an inkjet head that is the closest to the exposure means is preferably at least 2 cm but no greater than 30 cm, and more preferably at least 5 cm but no greater than 20 cm.

Furthermore, the image recording equipment that can be used in the present invention preferably has a mechanism equipped with exposure means on both sides of an inkjet head unit.

Moreover, with regard to the inkjet recording method of the present invention, it is preferable for the mechanism equipped with the inkjet head unit and exposure means to be able to scan above the surface of a recording medium and in a direction perpendicular to the transport direction of the recording medium. Furthermore, in the process of image formation by inkjet, in either a case in which a recording medium is fixed to a support, etc. and an inkjet head unit is operated or a case in which an inkjet head is fixed and a recording medium is operated, the speed at which the inkjet head unit or the recording medium is operated is preferably at least 0.5 m/sec but no greater than 3.5 m/sec, more preferably at least 0.7 m/sec but no greater than 3.0 m/sec, and yet more preferably at least 0.9 m/sec but no greater than 2.5 m/sec. When in this range, a system that can achieve a balance between good productivity and good discharge stability in the first exposure within 0.20 seconds after ink discharge is obtained.

Image formation equipment that can be used in the inkjet recording method of the present invention preferably has 2 to 32 inkjet heads for each color, and more preferably 20 to 32 for each color.

### Examples

The present invention is explained more specifically by reference to the Examples and Comparative Examples shown below. However, the present invention is not limited by these Examples. 'Parts' in the description below mean 'parts by mass' unless otherwise specified.

The materials used in the present invention are as follows. In addition, known compounds were used for the compounds not listed.
IRGALITE BLUE GLVO (phthalocyanine pigment, BASF)
CINQUASIA MAGENTA RT355D (C.I. Pigment Violet 19/C.I. Pigment Red 202 mixed crystal pigment, BASF)
NOVOPERM YELLOW 4G01 (C.I. Pigment Yellow 155 pigment, Clariant)
SPECIAL BLACK 250 (carbon black pigment, BASF)
SOLSPERSE 32000 (dispersant, Noveon)
V-CAP (*N*-vinylcaprolactam, ISP)
SR9003 (propylene glycol-modified neopentyl glycol diacrylate (PG-modified NPGDA), Sartomer)
SR420 (3,3,5-trimethylcyclohexyl acrylate, Sartomer)
SR531 (cyclic trimethylolpropane formal acrylate (CTFA), Sartomer)
SR339 (2-phenoxyethyl acrylate, Sartomer)
SR506 (isobornyl acrylate, Sartomer)
SR247 (neopentyl glycol diacrylate, Sartomer)
SR238 (hexanediol diacrylate, Sartomer)
CN964 A85 (difunctional aliphatic urethane acrylate containing 15 mass% tripropylene glycol diacrylate, Sartomer)
FIRSTCURE ST-1 (polymerization inhibitor, mixture of tris(*N*-nitroso-*N-*phenylhydroxyamine) aluminum salt (10 mass%) and phenoxyethyl acrylate (90 mass%), Chem First)
LUCIRIN TPO (photopolymerization initiator, 2,4,6-trimethylbenzoyldiphenylphosphine oxide, BASF)
IRGACURE 184 (photopolymerization initiator, 1-hydroxycyclohexyl phenyl ketone, Ciba-Geigy Ltd.)
SPEEDCURE ITX (photopolymerization initiator, isopropylthioxanthone, LAMBSON)
SPEEDCURE EDB (photopolymerization initiator adjuvant (polymerization accelerator), ethyl 4-(dimethylamino)benzoate, LAMBSON)
TEGORAD 2100 (silicone-based surfactant, Degussa)
BYK-307 (silicone-based surfactant, BYK Chemie)
FLUORAD (FC431, fluorine-based surfactant, 3M)
Preparation of cyan mill base C1 (phthalocyanine pigment)

300 parts by mass of IRGALITE BLUE GLVO, 620 parts by mass of SR339, and 80 parts by mass of SOLSPERSE 32000 were mixed by stirring, thus giving cyan mill base C1. Preparation of cyan mill base C1 was carried out by dispersing using a Motor Mill M50 disperser (Eiger Machinery, Inc.) with zirconia beads having a diameter of 0.65 mm at a peripheral speed of 9 m/s for 4 hours.

### Preparation of magenta mill base M1 (C.I. Pigment Violet 19/C.I. Pigment Red 202 mixed crystal pigment)

300 parts by mass of CINQUASIA MAGENTA RT355D, 600 parts by mass of SR339, and 100 parts by mass of SOLSPERSE 32000 were mixed by stirring, thus giving magenta mill base M1. Preparation of magenta mill base M1 was carried out by dispersing using a Motor Mill M50 disperser (Eiger Machinery, Inc.) with zirconia beads having a diameter of 0.65 mm at a peripheral speed of 9 m/s for 10 hours.

### Preparation of yellow mill base Y1 (C.I. Pigment Yellow 155)

300 parts by mass of NOVOPERM YELLOW 4G01, 600 parts by mass of SR339, and 100 parts by mass of SOLSPERSE 32000 were mixed by stirring, thus giving yellow mill base Y1. Preparation of yellow mill base Y1 was carried out by dispersing using a Motor Mill M50 disperser (Eiger Machinery, Inc.) with zirconia beads having a diameter of 0.65 mm at a peripheral speed of 9 m/s for 5 hours.

### Preparation of black mill base K1 (carbon black)

300 parts by mass of SPECIAL BLACK 250, 620 parts by mass of SR339, and 80 parts by mass of SOLSPERSE 32000 were mixed by stirring, thus giving black mill base K1. Preparation of black mill base K1 was carried out by dispersing using a Motor Mill M50 disperser (Eiger Machinery, Inc.) with zirconia beads having a diameter of 0.65 mm at a peripheral speed of 9 m/s for 7 hours.

### Method for preparing ink composition

The materials described in Table 1 or Table 2 were mixed by stirring, thus giving the respective ink compositions.

### <Inkjet recording method>

Inkjet printing was carried out using an Onset S40 UV inkjet print system (INCA), which had high productivity. Temperature was controlled so that the nozzle section was always at 45°C. A piezo type inkjet head was driven so as to discharge multisize dots of about 30 pL. UV lamps employed an H bulb, and were placed at both ends of a head scanning unit. The distance between both ends of the inkjet head unit and an end of a lamp unit was set between 12 cm and 28 cm. Each of the colors of CMYK had 28 heads installed in a head unit.

In the Onset S40, the head and the lamp unit were fixed, and printing was carried out by operating a support-equipped head portion underneath the head/lamp unit.

Among the lamps disposed at both ends, the lamp positioned to the rear with respect to the scanning direction (trailing lamp) was the lamp that a landed inkjet droplet was first exposed to; with regard to this lamp, the main scan speed and the discharge frequency were adjusted so that irradiation started within 0.1 seconds after ink landed on the recording medium, and this lamp was focused so that the irradiation intensity was 20 to 400 mW/cm² or below. Subsequently, in the main exposure, a pattern in which the leading lamp, that is, the lamp on the front face in the direction of travel of the head unit when the head/lamp unit had passed once and the next pass was being scanned, was focused at an illumination intensity of at least 1500 mW/cm² was carried out.

Furthermore, as another pattern, lamps at both ends were focused at an irradiation intensity of 20 to 400 mW/cm² or below, and after all passes were completed, the lamps at both ends were focused at an illumination intensity of at least 1,500 mW/cm², thus carrying out post-curing.

The inkjet system used was a system in which the head/lamp unit was fixed, and scanning was carried out by operating a support head, and was set so that a solid image could be drawn by a total number of head passes of 6 (bidirectional printing) to 16 times.

As an image, a 100% solid image having a size of 150 cm x 300 cm was formed on a coated paper (Oji Paper Co., Ltd.).

With regard to the exposure surface illumination intensity and the integrated exposure, a UV Power Map (EIT Instrumentation & Technology) was used, and the sum total of the UVA, UVB, and UVC regions (a wavelength region of 240 to 400 nm) was used for the exposure surface illumination intensity.

### Evaluation of surface gloss

Measurement was carried out for an image obtained by the inkjet recording method using a surface gloss meter manufactured by Sheen Instruments Ltd. at a measurement angle of 60°. The measurement was carried out 24 hours after printing. The evaluation criteria were as follows.
5: a surface gloss of at least 50
4: a surface gloss of at least 40 but less than 50
3: a surface gloss of at least 30 but less than 40
2: a surface gloss of at least 20 but less than 30
1: a surface gloss of less than 20

### <Evaluation of image coverage>

Evaluation was carried out visually using an image obtained by the inkjet recording method.
4: no dropouts (gaps between landed fired droplets) could be seen at all in a solid image even when examined at a position 50 cm away.
3: no dropouts could be seen in a solid image when examined at a position 2 m away, but there were a few dropouts in the form of dots in the image when examined at a position 50 cm away.
2: a few dropouts in the form of dots in an image could be seen when examined at a position 2 m away.
1: dropouts in the form of dots in an image could be clearly seen even when examined at a position 2 m away.

### <Evaluation of bleeding>

Evaluation of bleeding was carried out visually using an image obtained by the inkjet recording method.
4: edge was not blurred due to bleeding even when edge part of image was examined with a 10x microscope.
3: edge was slightly blurred due to bleeding when edge part of image was examined with a 10x microscope, but it could not be seen by eye at a position 50 cm away.
2: edge was slightly blurred due to bleeding when examined by eye at a position 50 cm away.
1: edge was clearly blurred due to bleeding when examined by eye at a position 50 cm away.

### <Scratch resistance>

A JIS standard pencil hardness test (JIS K5600-5-4) was carried out using an image obtained by the inkjet recording method.
5: 2H to 6H
4: F to H
3: B to HB
2: 3B to 2B
1: 6B to 4B

**(Table 1)**

| | | | Example | | | |
|---|---|---|---|---|---|---|
| | | | C1 | M1 | Y1 | K1 |
| Pigment | | IRGALITE BLUE GLVO | 2.52 | - | - | - |
| | | CINQUASIA MAGENTA RT355D | - | 4.2 | - | - |
| | | NOVOPERM YELLOW 4G01 | - | - | 2.4 | - |
| | | SPECIAL BLACK 250 | - | - | - | 2.52 |
| Dispersant | | SOLSPERSE 32000 | 0.672 | 0.672 | 0.672 | 0.672 |
| Monomer | I | Cyclic trimethylolpropane formal acrylate | 48 | 15 | 25 | 35 |
| | II | 3,3,5-Trimethylcyclohexyl acrylate | - | - | - | - |
| | Other | *N*-Vinylcaprolactam | 12 | 25 | 18 | 12 |
| | | 2-Phenoxyethyl acrylate | 9 | 29 | 26 | 22 |
| | | Isobornyl acrylate | - | - | - | - |
| | | Neopentyl glycol diacrylate | - | - | - | - |
| | | Hexanediol diacrylate | 7 | 7 | 7 | 7 |
| Oligomer | | CN964 A85 | 4.36 | 2.68 | 4.48 | 4.36 |
| Polymerization inhibitor | | FIRSTCURE ST-1 (Al salt only) | 0.05 | 0.05 | 0.05 | 0.05 |
| Polymerization initiator | | IRGACURE 184 | 3 | 3 | 3 | 3 |
| | | LUCIRIN TPO | 8 | 8 | 8 | 8 |
| | | Benzophenone | 2.8 | 2.8 | 2.8 | 2.8 |
| | | SPEEDCURE ITX | 0.8 | 0.8 | 0.8 | 0.8 |
| | | SPEEDCURE EDB | 1.7 | 1.7 | 1.7 | 1.7 |
| Surfactant | | TEGORAD 2100 (silicone-based) | - | - | - | - |
| | | BYK-307 (silicone-based) | 0.1 | 0.1 | 0.1 | 0.1 |
| | | FLUORAD (fluorine-based) | - | - | - | - |
| Total (parts) | | | 100.00 | 100.00 | 100.00 | 100.00 |
| Surface tension of ink excluding only the surfactant (A) (mN/m) | | | 37.2 | 36.5 | 36.6 | 36.8 |
| Surface tension of ink (B) (mN/m) | | | 23.1 | 23.0 | 23.1 | 23.1 |

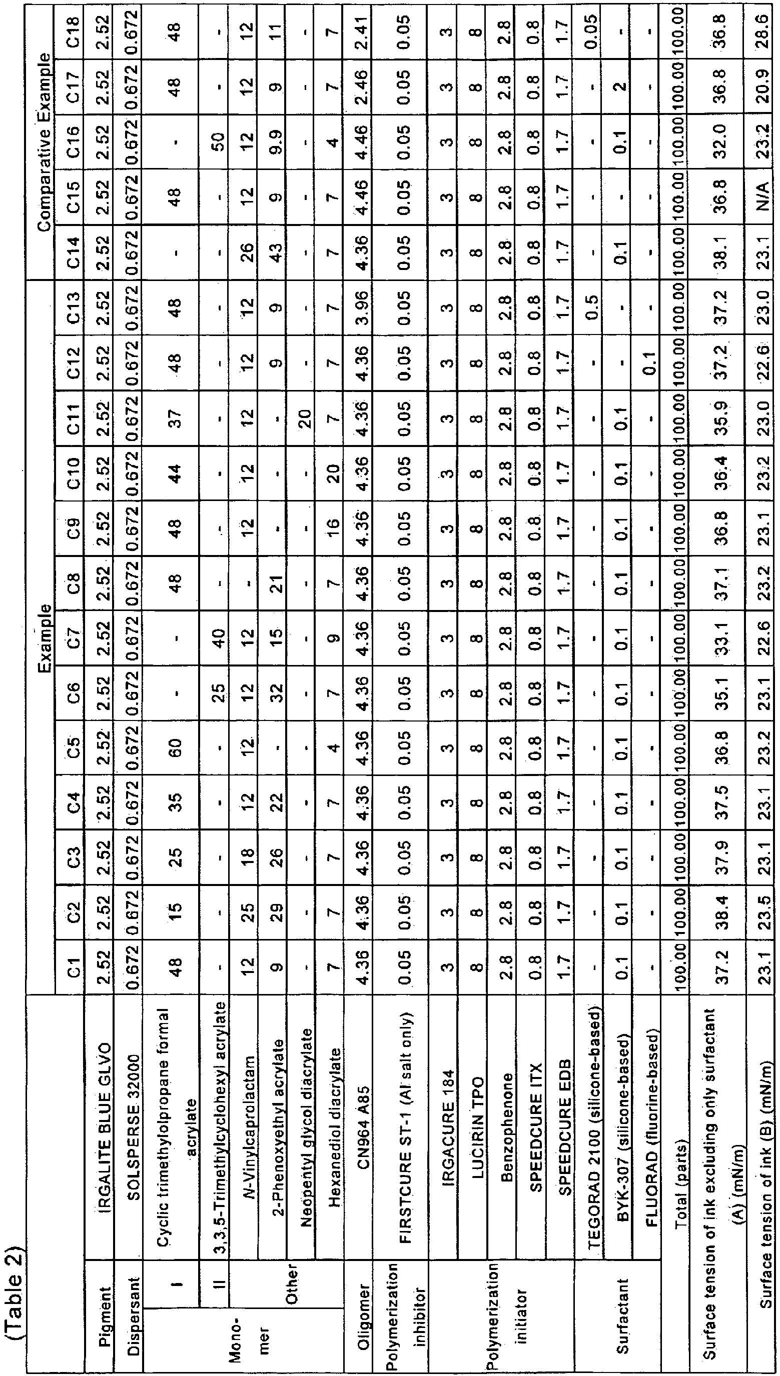

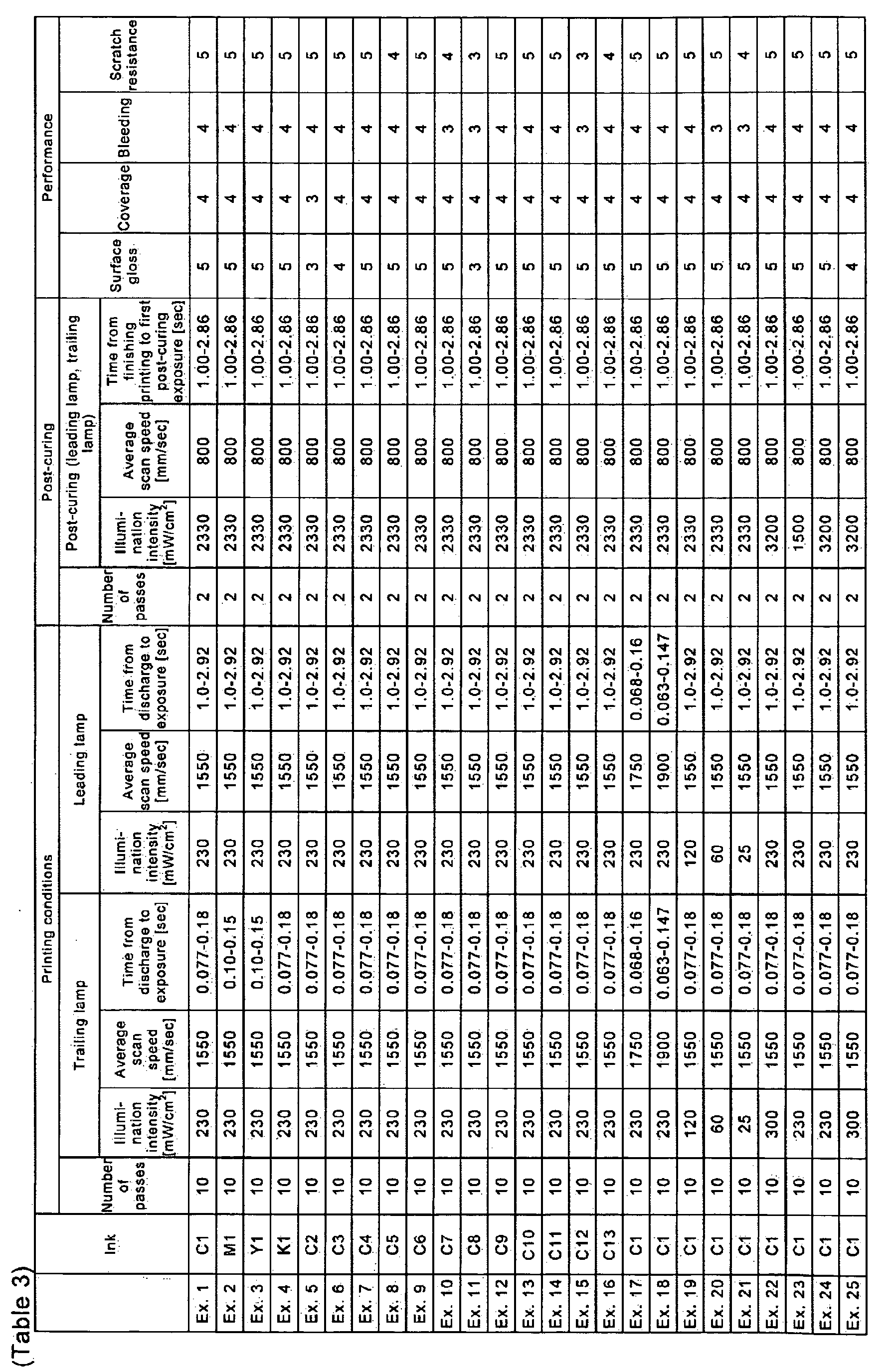

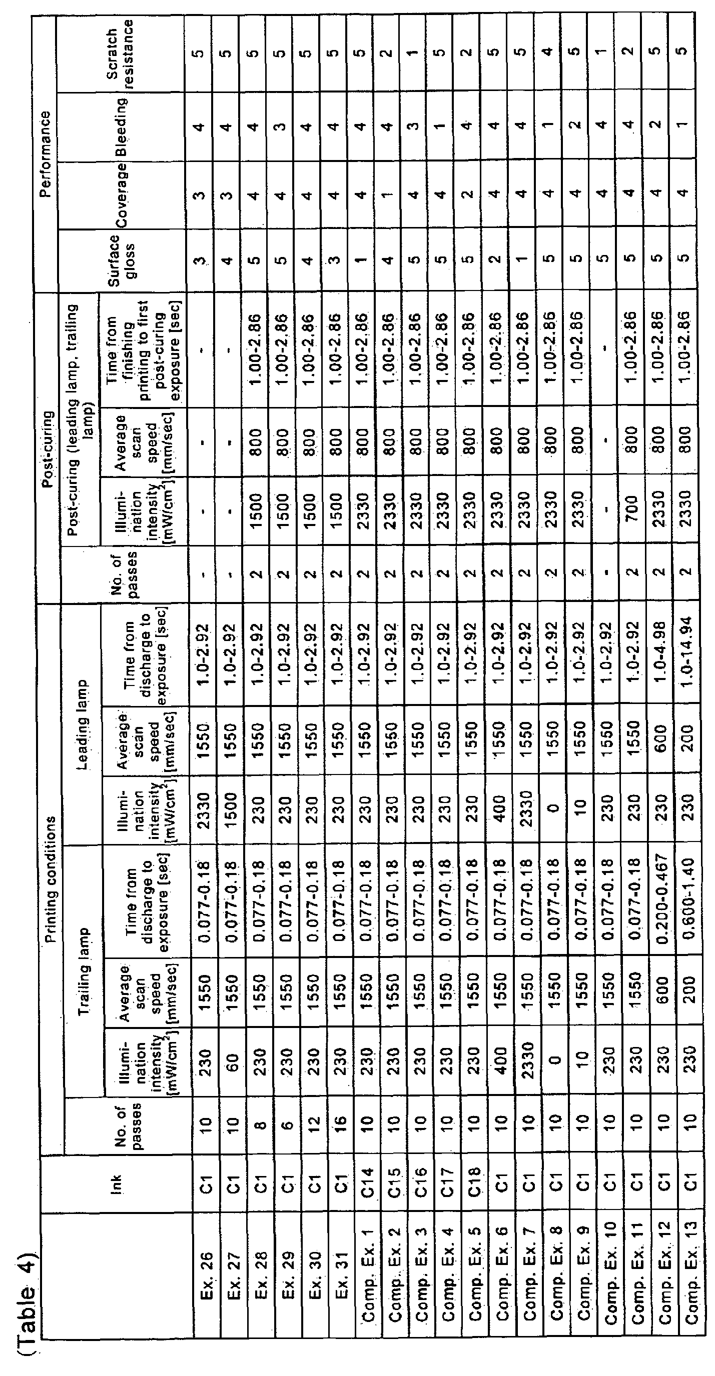

## Claims

1. An inkjet recording method comprising:
(1) a step of discharging via an inkjet head an ink comprising (Component A) a silicone-based or fluorine-based surfactant and (Component B) at least one type of monofunctional monomer among compounds represented by Formula (I) or Formula (II);
(2) a step of irradiating all inks discharged via the head with actinic radiation by exposure means having an illumination intensity of at least 20 mW/cm² but less than 300 mW/cm² at a time of at least 0 seconds but less than 0.20 seconds after discharge; and
(3) a step of irradiating all inks discharged via the head with actinic radiation by exposure means having an illumination intensity of at least 1,500 mW/cm² after at least 0.20 seconds have elapsed after discharge,
the ink having a surface tension at 25°C of 22.0 to 26.0 mN/m, and
the ink, excluding only Component A, having a surface tension at 25°C of 33.0 to 38.5 mN/m, 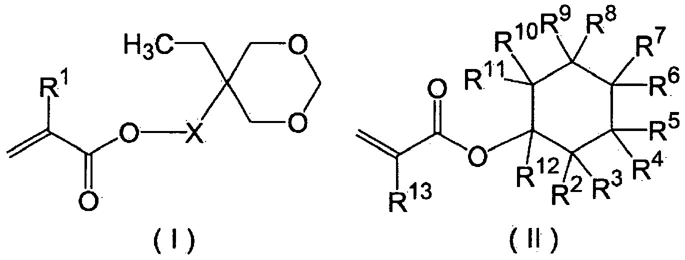 wherein R¹ denotes a hydrogen atom or a methyl group, X denotes a single bond or a divalent linking group, R² to R¹² independently denote a hydrogen atom or an alkyl group, and R¹³ denotes a hydrogen atom or a methyl group.

2. The inkjet recording method according to Claim 1, wherein the ink further comprises (Component C) a polyfunctional monomer.

3. The inkjet recording method according to Claim 1 or 2, wherein the ink comprises a polyfunctional (meth)acrylate compound in an amount of at least 5 mass% but no greater than 30 mass% of the total ink mass.

4. The inkjet recording method according to any one of Claims 1 to 3, wherein the ink further comprises an *N*-vinyllactam.

5. The inkjet recording method according to Claim 4, wherein the *N*-vinyllactam is *N*-vinylcaprolactam.

6. The inkjet recording method according to any one of Claims 1 to 5, wherein Component B comprises a compound represented by Formula (I).

7. The inkjet recording method according to any one of Claims 1 to 6, wherein the ink further comprises (Component D) a radical polymerization initiator.

8. The inkjet recording method according to any one of Claims 1 to 7, wherein the ink further comprises (Component G) a colorant.

9. The inkjet recording method according to any one of Claims 1 to 8, wherein steps (1) and (2) above are repeated twice to sixteen times for the same area.

10. The inkjet recording method according to any one of Claims 1 to 9, wherein the ink has a surface tension at 25°C of 22.5 to 24.0 mN/m.

11. The inkjet recording method according to any one of Claims 1 to 10, wherein the ink, excluding only Component A, has a surface tension at 25°C of 35.0 to 38.5 mN/m.

12. The inkjet recording method according to any one of Claims 1 to 11, wherein the ink further comprises a polymerization accelerator.

13. The inkjet recording method according to Claim 12, wherein the polymerization accelerator is an aminobenzoate derivative.

14. The inkjet recording method according to any one of Claims 1 to 13, wherein it is carried out by inkjet recording equipment comprising a mechanism equipped with exposure means on both sides of an inkjet head unit.

15. The inkjet recording method according to Claim 14, wherein it is carried out by inkjet recording equipment comprising a mechanism equipped with exposure means on both sides of an inkjet head unit in a direction perpendicular to the direction of travel of a recording medium.

## Patentansprüche

1. Tintenstrahlaufzeichnungsverfahren, umfassend:
(1) einen Schritt des Austragens einer Tinte, umfassend (Komponente A) ein auf Silikon basierendes oder auf Fluor basierendes Tensid und (Komponente B) mindestens einen Typ von monofunktionellem Monomer aus Verbindungen der Formel (I) oder Formel (II), über einen Tintenstrahlkopf;
(2) einen Schritt des Bestrahlens aller über den Kopf ausgetragenen Tinten mit aktinischer Strahlung durch Belichtungsmittel mit einer Beleuchtungsintensität von mindestens 20 mW/cm², aber weniger als 300 mW/cm², zu einer Zeit zwischen mindestens 0 Sekunden, aber weniger als 0,20 Sekunden nach dem Austragen; und
(3) einen Schritt des Bestrahlens aller über den Kopf ausgetragenen Tinten mit aktinischer Strahlung durch Belichtungsmittel mit einer Beleuchtungsintensität von mindestens 1500 mW/cm², nachdem mindestens 0,20 Sekunden nach dem Austragen verstrichen sind;
wobei die Tinte eine Oberflächenspannung bei 25°C von 22,0 bis 26,0 mN/m aufweist und
die Tinte unter Ausschluss von nur Komponente A eine Oberflächenspannung bei 25°C von 33,0 bis 38,5 mN/m aufweist, 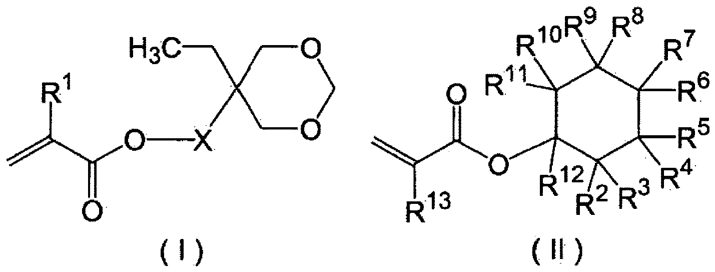 wobei R¹ für ein Wasserstoffatom oder eine Methylgruppe steht, X für eine Einfachbindung oder eine zweiwertige Brückengruppe steht, R² bis R¹² unabhängig für ein Wasserstoffatom oder eine Alkylgruppe stehen und R¹³ für ein Wasserstoffatom oder eine Methylgruppe steht.

2. Tintenstrahlaufzeichnungsverfahren nach Anspruch 1, bei dem die Tinte ferner (Komponente C) ein polyfunktionelles Monomer umfasst.

3. Tintenstrahlaufzeichnungsverfahren nach Anspruch 1 oder 2, wobei die Tinte eine polyfunktionelle (Meth)Acrylatverbindung in einer Menge von mindestens 5 Massen-%, aber höchstens 30 Massen-%, bezogen auf die gesamte Tintenmasse, umfasst.

4. Tintenstrahlaufzeichnungsverfahren nach einem der Ansprüche 1 bis 3, bei dem die Tinte ferner ein N-Vinyllactam umfasst.

5. Tintenstrahlaufzeichnungsverfahren nach Anspruch 4, wobei es sich bei dem N-Vinyllactam um N-Vinylcaprolactam handelt.

6. Tintenstrahlaufzeichnungsverfahren nach einem der Ansprüche 1 bis 5, wobei Komponente B eine Verbindung der Formel (I) umfasst.

7. Tintenstrahlaufzeichnungsverfahren nach einem der Ansprüche 1 bis 6, bei dem die Tinte ferner (Komponente D) einen Radikalpolymerisationsinitiator umfasst.

8. Tintenstrahlaufzeichnungsverfahren nach einem der Ansprüche 1 bis 7, bei dem die Tinte ferner (Komponente G) ein Farbmittel umfasst.

9. Tintenstrahlaufzeichnungsverfahren nach einem der Ansprüche 1 bis 8, bei dem man die obigen Schritte (1) und (2) für denselben Bereich zweimal bis sechzehnmal wiederholt.

10. Tintenstrahlaufzeichnungsverfahren nach einem der Ansprüche 1 bis 9, bei dem die Tinte eine Oberflächenspannung bei 25°C von 22,5 bis 24,0 mN/m aufweist.

11. Tintenstrahlaufzeichnungsverfahren nach einem der Ansprüche 1 bis 10, bei dem die Tinte unter Ausschluss von nur Komponente A eine Oberflächenspannung bei 25°C von 35,0 bis 38,5 mN/m aufweist.

12. Tintenstrahlaufzeichnungsverfahren nach einem der Ansprüche 1 bis 11, bei dem die Tinte ferner einen Polymerisationsbeschleuniger umfasst.

13. Tintenstrahlaufzeichnungsverfahren nach Anspruch 12, bei dem es sich bei dem Polymerisationsbeschleuniger um ein Aminobenzoatderivat handelt.

14. Tintenstrahlaufzeichnungsverfahren nach einem der Ansprüche 1 bis 13, wobei es mit einer Tintenstrahlaufzeichnungseinrichtung mit einem Mechanismus, der auf beiden Seiten einer Tintenstrahlkopfeinheit mit Belichtungsmitteln ausgestattet ist, durchgeführt wird.

15. Tintenstrahlaufzeichnungsverfahren nach Anspruch 14, wobei es mit einer Tintenstrahlaufzeichnungseinrichtung mit einem Mechanismus, der auf beiden Seiten einer Tintenstrahlkopfeinheit in einer zur Bewegungsrichtung eines Aufzeichnungsmediums senkrechten Richtung mit Belichtungsmitteln ausgestattet ist, durchgeführt wird.

## Revendications

1. Procédé d'enregistrement à jet d'encre comprenant :
(1) une étape de déchargement par une tête de jet d'encre d'une encre comprenant (composant A) un tensioactif à base de silicone ou à base de fluor et (composant B) au moins un type de monomère monofonctionnel parmi les composés représentés par la formule (I) ou la formule (II) ;
(2) une étape d'irradiation de toutes les encres déchargées par la tête avec un rayonnement actinique par des moyens d'exposition ayant une intensité d'éclairage d'au moins 20 mW/cm², mais moins de 300 mW/cm² à un temps d'au moins 0 seconde, mais moins de 0,20 seconde après déchargement ; et
(3) une étape d'irradiation de toutes les encres déchargées par la tête avec un rayonnement actinique par des moyens d'exposition ayant une intensité d'éclairage d'au moins 1.500 mW/cm² après qu'au moins 0,20 seconde s'est écoulée après déchargement,
l'encre ayant une tension superficielle à 25 °C de 22,0 à 26,0 mN/m, et
l'encre, à l'exclusion du seul composant A, ayant une tension superficielle à 25 °C de 33,0 à 38,5 mN/m, 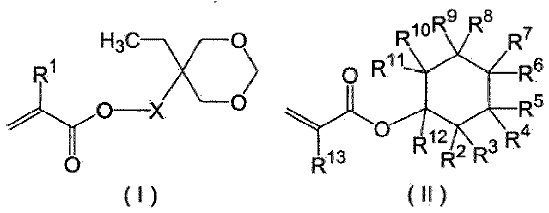 dans lesquelles R¹ représente un atome d'hydrogène ou un groupe méthyle, X représente une simple liaison ou un groupe de liaison divalent, R² à R¹² représentent indépendamment un atome d'hydrogène ou un groupe alkyle, et R¹³ représente un atome d'hydrogène ou un groupe méthyle.

2. Procédé d'enregistrement à jet d'encre selon la revendication 1, dans lequel l'encre comprend en outre (composant C) un monomère polyfonctionnel.

3. Procédé d'enregistrement à jet d'encre selon la revendication 1 ou 2, dans lequel l'encre comprend un composé de (méth)acrylate polyfonctionnel dans une quantité d'au moins 5 % en masse, mais pas plus de 30 % en masse de la masse totale d'encre.

4. Procédé d'enregistrement à jet d'encre selon l'une quelconque des revendications 1 à 3, dans lequel l'encre comprend en outre un *N*-vinyllactame.

5. Procédé d'enregistrement à jet d'encre selon la revendication 4, dans lequel le *N*-vinyllactame est le *N*-vinylcaprolactame.

6. Procédé d'enregistrement à jet d'encre selon l'une quelconque des revendications 1 à 5, dans lequel le composant B comprend un composé représenté par la formule (I) .

7. Procédé d'enregistrement à jet d'encre selon l'une quelconque des revendications 1 à 6, dans lequel l'encre comprend en outre (composant D) un initiateur de polymérisation radicalaire.

8. Procédé d'enregistrement à jet d'encre selon l'une quelconque des revendications 1 à 7, dans lequel l'encre comprend en outre (composant G) un colorant.

9. Procédé d'enregistrement à jet d'encre selon l'une quelconque des revendications 1 à 8, dans lequel les étapes (1) et (2) ci-dessus sont répétées deux à seize fois pour la même zone.

10. Procédé d'enregistrement à jet d'encre selon l'une quelconque des revendications 1 à 9, dans lequel l'encre a une tension superficielle à 25 °C de 22,5 à 24,0 mN/m.

11. Procédé d'enregistrement à jet d'encre selon l'une quelconque des revendications 1 à 10, dans lequel l'encre, à l'exclusion du seul composant A, a une tension superficielle à 25 °C de 35,0 à 38,5 mN/m.

12. Procédé d'enregistrement à jet d'encre selon l'une quelconque des revendications 1 à 11, dans lequel l'encre comprend en outre un accélérateur de polymérisation.

13. Procédé d'enregistrement à jet d'encre selon la revendication 12, dans lequel l'accélérateur de polymérisation est un dérivé d'aminobenzoate.

14. Procédé d'enregistrement à jet d'encre selon l'une quelconque des revendications 1 à 13, qui est réalisé par un équipement d'enregistrement à jet d'encre comprenant un mécanisme équipé de moyens d'exposition des deux côtés d'une unité de têtes de jet d'encre.

15. Procédé d'enregistrement à jet d'encre selon la revendication 14, qui est réalisé par un équipement d'enregistrement à jet d'encre comprenant un mécanisme équipé de moyens d'exposition des deux côtés d'une unité de têtes de jet d'encre dans une direction perpendiculaire à la direction de déplacement d'un support d'enregistrement.
